# FASCICULE DE BREVET EUROPEEN

(11) **EP 0 512 910 B1**
(45) Date de publication et mention de la délivrance du brevet: **03.01.1996**
(21) Numéro de dépôt: 92401250.3
(22) Date de dépôt: 04.05.1992
(51) Int. Cl.: A23G 1/00

(54) **Chocolat hypocalorique**
Hypokalorische Schokolade
Hypocaloric chocolate

(30) Priorité: 06.05.1991 FR 9105511
(43) Date de publication de la demande: 11.11.1992
(73) Titulaire: Roquette Frères, F-62136 Lestrem (FR)
(72) Inventeur: Mentink, Léon, F-59940 Estaires (FR); Serpelloni, Michel, F-62660 Beuvry-Les-Bethune (FR)
(74) Mandataire: Boulinguiez, Didier

(56) Documents cités:
- EP-A- 0 284 747
- EP-A- 0 285 187
- EP-A- 0 317 917
- CH-A- 677 429
- DE-A- 2 341 639
- FR-A- 2 201 042
- GB-A- 1 472 510
- US-A- 2 487 931
- US-A- 4 017 645

## Description

La présente invention concerne un nouveau chocolat hypocalorique, ainsi qu'un procédé de fabrication dudit chocolat.

On distingue trois types de chocolat : le chocolat noir, le chocolat au lait et le chocolat blanc.

D'une façon générale, un chocolat noir traditionnel peut être défini comme un produit obtenu à partir de pâte de cacao constituée par une liqueur de cacao contenant environ 54% de matières grasses, du saccharose et du beurre de cacao. Le chocolat au lait comporte en plus de la matière sèche de lait. Le chocolat blanc en comprend également mais est exempt de cacao sec dégraissé.

Tous ces chocolats peuvent contenir des ingrédients de garnissage tels que les noisettes, le riz soufflé, les fruits secs ou autres.

D'un point de vue physique, un chocolat peut être assimilé à une dispersion presque anhydre de très fines particules non grasses (saccharose, lactose, protéines, minéraux) dans une phase grasse solidifiée, constituée essentiellement de triglycérides. Ces derniers sont issus uniquement du cacao dans le cas d'un chocolat noir, mais proviennent du lait dans le cas du chocolat au lait ou blanc.

Un procédé classique de fabrication de chocolat comprend les étapes essentielles successives suivantes : pétrissage - raffinage - éventuellement conchage à sec - conchage liquide - tempérage - moulage - refroidissement - conditionnement.

Le pétrissage vise à obtenir une pâte homogène à partir de sucre, de pâte de cacao et éventuellement de beurre de cacao et de poudre de lait. L'opération s'effectue dans un pétrin mécanique. La pâte obtenue doit présenter une texture particulière, adaptée à l'opération ultérieure de raffinage. Il est possible d'ajuster celle-ci par le choix de la granulométrie du sucre et également par la teneur en matières grasses.

Le raffinage consiste à laminer la pâte obtenue en sortie de pétrissage entre des cylindres en acier, de façon à réduire la taille des particules à moins de 25 microns. Cette opération transforme la pâte initiale en poudre fine, hygroscopique et susceptible de piéger les odeurs ambiantes. A ce stade, il est donc souhaitable que le conchage intervienne aussi rapidement que possible.

Le conchage est essentiel pour modifier l'arôme et améliorer les caractéristiques rhéologiques du chocolat. Cette opération peut avoir lieu, en une seule étape (conchage liquide) ou en deux étapes (conchage à sec puis liquide) et durer de quelques heures à plusieurs jours. La poudre raffinée est malaxée à chaud, vers 75-80°C dans le cas d'un chocolat noir et vers 65°C pour les chocolats blancs et au lait. Le conchage à sec consiste à réaliser ce malaxage à chaud en l'absence de fortes teneurs en matières grasses. Il permet de réduire les temps de conchage.

Au cours de cette opération l'arôme du chocolat se développe. Grâce à l'élévation de température et à l'aération de la masse mises en oeuvre, des composés indésirables comme les aldéhydes et acides gras courts s'échappent de la masse par volatilisation alors que d'autres composés aromatiques sont formés. De plus, la rhéologie du produit change : la poudre obtenue à l'issue du raffinage évolue vers l'état pâteux. Les particules insolubles (de sucre, de cacao, de lait) se dissocient par friction et départ d'eau et s'arrondissent pour communiquer à la pâte une plus grande fluidité avec un seuil d'écoulement plus faible. Pour améliorer encore ces caractéristiques, de la lécithine est ajoutée au chocolat quelques heures avant la fin du conchage. Celle-ci enrobe les particules sucrées et émulsifie les traces d'eau résiduelle pour donner au chocolat de bonnes propriétés d'écoulement qui sont essentielles pour l'étape ultérieure de coulage.

Le tempérage du chocolat est destiné à permettre une cristallisation du beurre de cacao sous forme stable. Pour cela, la pâte chocolatée est amenée à une température, voisine de 29°C, parfois légèrement inférieure, de façon à créer des amorces cristallines de toute nature, puis à une température légèrement plus élevée lors du coulage, afin de faire fondre les formes cristallines instables.

Le coulage est une opération de mise en forme du chocolat, par exemple en tablettes ou en figurines. Il peut s'agir de chocolats pleins ou fourrés. Il existe également du chocolat dit "de couverture" destiné à recouvrir la surface de produits tels que gâteaux, barres céréalières, fruits confits.

Lors de l'étape de refroidissement, la matière grasse fige par cristallisation sous une forme stable si l'opération de tempérage a été bien conduite. Dans le cas inverse, le chocolat peut être difficile à démouler, fondre dans les doigts et également se dégrader dans le temps du fait d'un phénomène appelé blanchiment gras.

D'autres techniques de production sont parfois employées. La plus connue est la technique "crumb" très utilisée en Angleterre pour la production de chocolats au lait. Elle consiste à mélanger du lait ou des produits laitiers concentrés à 30-40% de matières sèches avec du sucre, à porter le mélange à ébullition sous vide à 75°C environ, puis à malaxer ce mélange avec de la pâte de cacao avant de procéder au séchage sous vide poussé de façon à obtenir une poudre contenant moins de 1% d'eau. Ce procédé permet d'obtenir un chocolat au lait ayant des propriétés sensorielles très différentes de celles obtenues avec la méthode classique.

Le saccharose est depuis les débuts de l'industrie du chocolat la charge sucrante de référence. Ses propriétés sensorielles et technologiques le rendent particulièrement adapté à ce type de produit de confiserie.

En revanche, ses propriétés nutritionnelles peuvent donner lieu à des critiques. En effet, le saccharose possède une valeur calorique de 4 kcal/g, ce qui confère au chocolat, dont le saccharose est le constituant essentiel, une valeur calorique non négligeable.

En outre, il est connu que le sucre est tout à fait contre-indiqué pour les diabétiques car le glucose qui le constitue est rapidement assimilable par l'organisme, ce qui peut générer de graves hyperglycémies chez ces malades.

Enfin, le saccharose est un substrat fermentescible par les bactéries commensales de la bouche, qui le transforment en acides corrosifs à l'origine des caries dentaires.

Pour pallier ces inconvénients, il a été imaginé de substituer le saccharose par les polyols dans le chocolat. Ces polyols peuvent être notamment des monosaccharides hydrogénés tels que le sorbitol, le mannitol, le xylitol, l'érythritol ou des disaccharides hydrogénés tels que le maltitol, le lactitol, l'isomaltulose hydrogéné (mélange équimoléculaire de glucopyranosyl-1-6 sorbitol et de glucopyranosyl 1-6 mannitol).

A l'état pur, ces polyols n'ont pas de pouvoir réducteur et ne sont pas fermentés par la flore buccale en acides. Ils permettent donc la fabrication de chocolats non cariogènes dans la mesure où les autres ingrédients de la formulation n'apportent pas de sucres fermentescibles. Dans le cas de chocolats au lait et de chocolats blancs, le lait peut être remplacé par des ingrédients laitiers délactosés afin d'assurer au mieux cette hypocariogénicité.

Les polyols sont lentement métabolisés et n'entraînent pas après leur consommation une élévation brutale du taux de glucose dans le sang. En conséquence, ils sont souvent recommandés dans l'alimentation des diabétiques.

De plus, leur valeur calorique est estimée en moyenne à 2,4 kcal/g (10,0 KJ/g) soit environ 60% de celle du sucre.

Cependant, en ce qui concerne l'allègement calorique, on ne peut que constater que celui-ci reste encore limité pour les chocolats aux polyols commercialisés actuellement, et ce pour la raison simple qu'à la valeur calorique de la charge édulcorante s'ajoute celle, beaucoup plus importante, des matières grasses qui constituent un autre ingrédient essentiel du chocolat.

Ces matières grasses se présentent sous forme de triglycérides, et proviennent généralement du cacao et/ou du lait. Elles se différencient d'autres matières grasses par leur aptitude à être métabolisées au moins partiellement, sans entraîner de troubles gastro-intestinaux ni même interférer sur le métabolisme des vitamines.

Leur valeur calorique s'élève en effet à 9kcal/g. De plus, elles sont essentiellement sous forme saturée. Elles ne sont donc pas particulièrement recommandées par les nutritionnistes et vont à l'encontre du souci actuel des consommateurs, qui est de limiter l'apport excessif de calories par l'alimentation.

Pour répondre à ce souci, dans le cas du chocolat, il conviendrait donc de remplacer le saccharose par un substitut faiblement calorique, les polyols étant notamment à ce titre tout à fait appropriés, mais également de réduire la quantité de matières grasses. Or, il existe des impératifs technologiques de fabrication dont notamment les caractéristiques rhéologiques nécessaires pour procéder dans de bonnes conditions aux opérations de raffinage, de concha- et de coulage, qui a priori s'opposent à une réduction significative de la teneur en matières grasses dans les chocolats aux polyols.

Cela se vérifie particulièrement pour le raffinage, qui est une étape pour laquelle la pâte doit être suffisamment cohésive pour bien se prêter au broyage dans les cylindres du dispositif de raffinage. Une pâte trop sèche rendrait impossible le laminage. Et, les matières grasses sont indispensables pour donner à la pâte une malléabilité qui permet un bon raffinage. A ce stade de fabrication, il semblait jusqu'alors impossible d'avoir une teneur en matières grasses inférieure à 28% pour le chocolat aux polyols. Un tel seuil prive le fabricant de l'opportunité avantageuse de mettre en oeuvre un conchage à sec favorisant le départ d'eau.

Ces matières grasses sont également très importantes lors du conchage et du coulage car elles donnent à la pâte une rhéologie adaptée et tempèrent les effets des polyols qui, en raison de leur hygroscopicité, ont plutôt tendance à augmenter cette viscosité, comme cela sera vu ci-après. Il est à noter que l'adjonction d'un émulsifiant comme la lécithine, qui est préalable au conchage et qui est destinée à diminuer la viscosité de la pâte de chocolat, ne peut compenser que dans une certaine mesure la diminution de la teneur en matière grasse. En effet, un excès de lécithine conduirait à former une émulsion eau dans huile trop stable, ce qui empêcherait l'évaporation d'eau et des composés volatifs recherchée lors du conchage, et pis encore pourrait amener l'effet inverse de celui recherché, à savoir une augmentation du seuil d'écoulement de la pâte de chocolat.

Il existe une autre difficulté à surmonter lorsque l'on essaie de réduire la teneur en matière grasse d'un chocolat. En effet, l'un des rôles de la matière grasse dans le chocolat est de former un réseau continu et solide de liaison entre les particules de cacao et d'édulcorant. Elle constitue en quelque sorte un ciment qui assure la cohésion, la tenue mécanique et la dureté du chocolat après refroidissement. Il convient donc de veiller à ne pas porter atteinte à ces caractéristiques.

Enfin, plus la réduction en matières grasses est importante, plus la phase grasse cristallise difficilement dans un état cristallin stable, c'est-à-dire permettant au chocolat de ne pas évoluer vers un aspect mat et blanchâtre, typique du phénomène connu sous le nom de blanchiment gras, et tout à fait préjudiciable au produit.

Il apparaissait donc impossible jusqu'alors de fabriquer des chocolats aux polyols comportant moins de 32%, de préférence moins de 31%, et plus préférentiellement encore moins de 29% de matières grasses.

En outre, comme cela a été évoqué précédemment, certains polyols peuvent être contraignants en ce qui concerne le procédé de fabrication de chocolat, en raison, notamment, de leur forte hygroscopicité, qui pose problème au stockage et lors de la mise en oeuvre du procédé. Il est ainsi recommandé de prévoir des ambiances conditionnées à taux d'humidité contrôlé pour éviter la reprise en eau. Ce phénomène s'observe particulièrement avec le sorbitol.

Toujours en relation avec ces problèmes d'hygroscopicité, la friabilité et la morphologie des poudres cristallines de certains polyols, comme le sorbitol et l'isomaltulose hydrogéné, entraînent lors du raffinage la formation de particules ayant une surface spécifique plus grande que celle du sucre. Cela rend la pâte travaillée plus hygroscopique donc plus visqueuse, et impose le recours à une quantité de matières grasses plus importante pour améliorer le comportement rhéologique de cette pâte.

Par ailleurs, les élévations de température qui se produisent de façon directe ou indirecte lors des opérations de broyage, de pétrissage, de raffinage, ou de conchage, rendent les polyols plus instables.

En premier lieu, leur hygroscopicité augmente. Dans le cas particulier du sorbitol, l'humidité relative critique à ne pas dépasser pour l'environnement de fabrication chute ainsi de 73% à 62% lorsque la température est élevée de 20 à 40°C.

En second lieu, les élévations de température peuvent conduire à une désorganisation des états cristallins, par libération de l'eau de cristallisation lorsque l'humidité relative est basse pour les polyols de forme cristalline hydratée (isomaltulose hydrogéné, lactitol monohydrate), ou par fonte des cristaux pour les polyols à bas point de fusion (xylitol, sorbitol), cette fonte des cristaux correspondant à leur passage à un état amorphe très hygroscopique.

Il est donc apparu nécessaire de limiter la température de conchage par exemple à 40-48°C pour le sorbitol et à 65°C pour le lactitol monohydrate, d'autant plus que le phénomène de reprise en eau s'amplifie de lui-même de façon beaucoup plus importante à haute température qu'à basse température, étant donné que les polyols sont alors plus solubles, et passent donc plus rapidement et plus aisément de l'état cristallin à l'état amorphe hygroscopique, accentuant ainsi la reprise en eau.

Or, il faut savoir qu'une reprise en eau lors du conchage conduit à un épaississement, voire à une prise en masse, de la pâte travaillée. Le coulage devient donc très difficile ou impossible et de toute façon le produit fini est de mauvaise qualité. Il présente par exemple une texture graineuse et sableuse.

Cette limitation de la température de conchage amoindrit les effets de cette étape essentielle au développement de l'arôme du chocolat et à l'amélioration de ses qualités rhéologiques. Et l'augmentation de la durée de conchage, qui est dommageable au fabricant sur le plan économique, ne permet pas de remédier réellement à cet inconvénient : l'élimination d'eau et de composés amers volatils par évaporation, est insuffisante.

Il ne reste alors que la solution d'utiliser des matières premières exemptes d'eau et plus élaborées, donc plus coûteuses.

Pour illustrer cette incapacité des fabricants de chocolat à maîtriser la réduction de la teneur en matières grasses dans les chocolats aux polyols, ainsi que les problèmes technologiques de fabrication liés aux caractéristiques physico-chimiques de ces ingrédients, on peut citer, par exemple, le brevet FR 2.201.042 qui, dans l'exemple 18 p.20 de la description, divulgue la préparation d'un chocolat au saccharose et au lactitol comprenant au minimum 32% en poids de matières grasses, et il s'agit là d'un seuil en deçà duquel la fabrication de chocolat est impossible. Mais cela représente encore une quantité relativement importante, et ce d'autant plus que la charge sucrante est essentiellement constituée de saccharose, produit calorique et cariogène.

De même, le brevet FR 2.499.576, portant sur des cristaux anhydres de maltitol, enseigne, dans son exemple 10, l'application dudit maltitol cristallisé à la fabrication de chocolat sans sucre, mais ce chocolat comprend encore 32% en poids de matières grasses.

La demande de brevet européen n° 0317917 concerne quant à elle un procédé de fabrication de chocolat au lait sans sucre, non cariogène, suivant la technique dénommée "crumb". Les substituts de sucre utilisés dans ce procédé sont le maltitol, le lactitol, ou l'isomaltulose hydrogéné (mélange équimolaire de glucopyranosyl -1-6 mannitol et de glucopyranosyl -1-6 sorbitol, commercialisé sous la marque déposée ISOMALT). Les chocolats fabriqués selon ce procédé ont une teneur en matières grasses qui n'est pas inférieure à 35% en poids. Il faut également noter que la technique "crumb" est tout à fait particulière et se différencie nettement des techniques traditionnelles de fabrication de chocolat.

Le préjugé technique selon lequel il n'était pas a priori techniquement possible d'abaisser la teneur en matières grasses de chocolat aux polyols, en particulier au maltitol, en dessous de 32% en poids, ressort clairement de la demande de brevet japonais n° 60/232058 qui décrit un chocolat dans lequel le sucre est remplacé par un mélange de maltitol poudre avec du lactose, ou du maltose, ou du mannitol, ou un mélange de ceux-ci. La teneur en matières grasses de certains des chocolats dont la préparation est décrite dans les exemples et dans les essais témoin est de l'ordre de 26,5% en poids mais il est expressément indiqué dans cette demande de brevet que le chocolat dont la charge sucrante est uniquement constituée par du maltitol (contrôle 2) est de qualité médiocre, à savoir qu'il est granuleux, qu'il présente un goût sucré non satisfaisant, et qu'il est sableux sur la langue. De plus, il est également souligné que son procédé d'obtention est très difficile à mettre en oeuvre. Le polyol employé est constitué par une poudre de sirop de maltitol. Ce chocolat au maltitol est d'ailleurs utilisé comme témoin négatif, destiné à mettre en évidence les avantages de l'invention revendiquée dans cette demande et qui prévoit précisément le mélange du maltitol avec au moins un autre sucre tel que le maltose, le lactose ou le mannitol, pour pallier les inconvénients d'un chocolat allégé en matières grasses dont la charge sucrante serait uniquement constituée par un polyol tel que le maltitol. La lecture de ce document ne pouvait donc que convaincre l'homme du métier de ne pas utiliser du maltitol comme charge sucrante pour préparer un chocolat aux polyols allégé en matières grasses.

Le brevet européen 0 285 187 concerne un chocolat hypocalorique dans lequel des esters de saccharose remplacent les matières grasses de cacao. Les compositions décrites dans ce document ne font pas état non plus d'un chocolat hypocalorique ayant un pourcentage de matière grasse inférieur à 32 %.

Concernant le maltitol et ce problème de la diminution de la teneur en matières grasses des aliments, il convient également de citer la demande de brevet européen n° 390 299 ayant trait à un aliment perfectionné contenant de la matière grasse dans lequel le perfectionnement consiste en une substitution totale ou partielle de la matière grasse par une quantité de maltitol effective sur le plan du goût. On ne manquera pas de noter, d'une part, le caractère trivial de cette invention sachant notamment que le maltitol est connu depuis fort longtemps comme un substitut de sucre et, d'autre part, le fait que le chocolat n'est pas explicitement mentionné parmi les produits visés par cette invention. Par suite, les problèmes propres aux procédés de fabrication de chocolat, comme par exemple la reprise en eau et le comportement rhéologique dont il a été question ci-dessus, ne sont absolument pas abordés. Or, on l'a vu, ces problèmes spécifiques sont de nature à entraver considérablement l'allègement en matières grasses du chocolat.

Par ailleurs, dans cette demande de brevet il n'est question que de la substitution pure et simple des matières grasses par le maltitol. Or il n'est pas inconcevable que la réduction en matières grasses dans des aliments gras et sucrés comme le chocolat puisse être compensée par une augmentation de la quantité de cacao sec dégraissé. Le contenu de cette demande de brevet n'est pas à prendre en compte dans le contexte d'un allègement de la teneur en matières grasses du chocolat. Et cela peut d'ailleurs être confirmé par une publication technique, datée du 01/06/90, de la titulaire de cette demande de brevet européen, la société TOWA CHEMICAL INDUSTRY Co., portant sur le maltitol poudre qu'elle commercialise sous la marque déposée AMALTY.

Cette publication comporte en effet page 4, un exemple d'application de l'AMALTY à la préparation de chocolat. La précaution d'emploi n°1 qui y est mentionnée stipule que la quantité de beurre de cacao doit être légèrement augmentée étant donné que l'AMALTY absorbe plus de matière grasse que le sucre en raison de sa plus forte porosité. En outre, il apparaît que dans la formulation de chocolat au lait au maltitol proposée, la teneur en matières grasses est d'environ 38,4% en poids.

Rien dans ce document n'indique donc ni ne suggère qu'un polyol tel que le maltitol est adapté à la fabrication de chocolat à teneur réduite en matières grasses.

Un autre article paru dans CONFECTIONERY MANUFACTURE & MARKETING Vol 22, n°5 de MAI 1985 fait état de l'application du maltitol poudre, commercialisé sous la marque MALBIT par la société MELIDA, à la préparation de chocolat à teneur réduite en matières grasses. Il apparaît une nouvelle fois que cette réduction est limitée à 36-37% en poids pour du chocolat au lait.

Concernant un autre polyol employé comme charge édulcorante dans du chocolat sans sucre, à savoir le lactitol monohydrate, la demande de brevet WO 90/06317 enseigne que la teneur en matières grasses atteinte pour du chocolat noir et du chocolat au lait préparés à l'aide dudit polyol (exemples 4 et 5) est respectivement de 33% et de 32,5% en poids.

Cette carence technologique peut être étendue à de nombreux polyols autres que ceux évoqués ci-dessus. Et cela est soutenu par l'article d'Anne CRIDLAND intitulé "Developments in dietetic chocolate" paru dans le Volume 24 n°10 de 1987 p.2 à 6 de la revue CONFECTIONERY MANUFACTURE & MARKETING, dans lequel l'auteur explique, page 6, dans le paragraphe intitulé "Fat", que la matière grasse dans le chocolat est probablement l'élément le plus important au regard des propriétés techniques et de texture du produit et qu'il n'existe pas de chocolat à valeur calorique réduite et de saveur agréable, remplissant les fonctions techniques nécessaires.

Faisant le constat de cet état de la technique, la société demanderesse s'est donnée pour objectif la mise au point d'un chocolat hypocalorique, qui, bien que présentant une teneur en matières grasses très réduite puisque inférieure à 32%, de préférence inférieure à 31% et plus préférentiellement encore inférieure à 29% en poids, présenterait des propriétés technologiques et organoleptiques comparables à celles du chocolat au saccharose traditionnel.

Par propriétés technologiques comparables, on entend aussi bien les propriétés du chocolat obtenu que la possibilité d'avoir recours pour sa fabrication à une technologie classique et en employant jusqu'à l'étape de conchage les mêmes ingrédients, hormis la charge édulcorante, que pour un chocolat classique. Le but recherché est en fait de s'affranchir, dans toute la mesure du possible, d'une part des contraintes de mise en oeuvre que peuvent être une ambiance conditionnée, un matériel sophistiqué ou une durée de fabrication longue, et d'autre part des difficultés techniques telles que la reprise en eau, le comportement rhéologique médiocre, ou la limitation de la température de conchage.

Et, c'est après de nombreux essais et études que la Société demanderesse a eu le mérite de trouver que l'objectif défini ci-dessus pouvait être atteint à la condition d'utiliser pour la constitution de la charge édulcorante des produits sélectionnés dans le groupe constitué par le maltitol cristallisé de haute pureté, le lactitol, l'isomaltulose hydrogéné, les polymères de saccharides hypocaloriques, ou leur mélange.

La présente invention a donc pour objet un chocolat hypocalorique comprenant avant conchage de la matière grasse, une charge édulcorante, au moins un émulsifiant et éventuellement du cacao sec dégraissé et/ou un produit lacté pulvérulent ou dérivé, caractérisé en ce qu'il présente une teneur en matière grasse totale inférieure à 32% en poids, de préférence inférieure à 31% et plus préférentiellement encore inférieure à 29% en poids par rapport à l'ensemble des ingrédients précités, et en ce que la charge édulcorante est à base d'au moins un produit choisi dans le groupe constitué par le maltitol cristallisé de haute pureté, le lactitol, l'isomaltulose hydrogéné et les polymères de saccharides hypocaloriques.

La teneur en matières grasses du chocolat selon l'invention est de préférence supérieure à 20% en poids et plus préférentiellement encore supérieure à 25%.

Par le terme chocolat, on entend aussi bien le chocolat noir que le chocolat au lait ou que le chocolat blanc, pouvant servir de base à la fabrication d'articles pleins, fourrés ou de couverture, avec ou sans adjonction d'éléments de garnissage.

Par charge édulcorante, on entend, au sens de la présente invention, tout produit ou mélange de produits autres que la matière grasse de cacao, le cacao sec dégraissé, les produits lactés pulvérulents ou dérivés et les émulsifiants, rajoutés avant conchage et susceptibles de former le constituant principal du chocolat et de lui donner une saveur sucrée.

En conséquence, ne sont pas considérés comme constituants de la charge édulcorante, les ingrédients de garnissage rajoutés au cours ou après l'étape de conchage tels que les céréales ou les fruits tels que les raisins secs ou les noisettes par exemple.

Conformément à l'invention, la charge édulcorante est constituée par au moins un des produits sélectionnés parmi le maltitol cristallisé de haute pureté, le lactitol et l'isomaltulose hydrogéné pulvérulents et les polymères de saccharides hypocaloriques pulvérulents.

On entend par maltitol cristallisé de haute pureté du maltitol cristallisé présentant une teneur en maltitol exprimée en poids sec/sec d'au moins 92%, de préférence d'au moins 95% et plus préférentiellement encore d'au moins 97%.

En ce qui concerne le lactitol, on utilise préférentiellement le lactitol monohydrate.

Quant à l'isomaltulose hydrogéné cristallisé, on peut utiliser par exemple celui commercialisé sous la marque PALATINIT ou la dénomination ISOMALT par la Sté SUD ZUCKER.

Ces produits sélectionnés conformément à l'invention permettent l'obtention de chocolat hypocalorique et hypocariogène présentant des qualités organoleptiques satisfaisantes, et permettent d'assurer des conditions de fabrication satisfaisantes.

De façon avantageuse, les constituants de la charge édulcorante se présentent sous forme anhydre ou déshydratée, c'est-à-dire comprennent moins de 1% et de préférence moins de 0,5% d'eau.

Par cacao sec dégraissé, on entend, au sens de la présente invention, de la matière sèche de cacao exempte de matières grasses. En pratique, on utilise généralement de la liqueur de cacao comprenant 54% environ de graisses, le complément en matières grasses de cacao étant apporté par le beurre de cacao.

Le terme produit lacté pulvérulent ou dérivé désigne notamment les poudres de lait entier, ou écrémé, éventuellement délactosé de manière à éliminer la majeure partie du lactose, cariogène, ainsi que toute poudre similaire d'origine laitière:poudre de lactosérum, de babeurre par exemple.

En sélectionnant une telle composition pour le chocolat, on obtient un très bon comportement de la pâte travaillée lors des opérations de raffinage, de conchage et de coulage.

Pour le raffinage, on constate que le broyage s'opère de façon aisée car la pâte possède de bonnes propriétés filmogènes et conduit à une poudre raffinée et broyée ne présentant pas d'exudation de matières grasses.

Le conchage se déroule sans problèmes de prise en masse de la pâte, qui présente de bonnes propriétés rhéologiques.

De même, l'évaporation des composés amers et la construction d'un profil aromatique idoine et adéquat s'effectue de façon satisfaisante, notamment du fait qu'il est possible de prévoir un conchage à sec avec des températures de conchage supérieures ou égales de préférence à 45°C, ce qui est tout à fait inhabituel dans la technologie des chocolats aux polyols.

Le chocolat obtenu présente, tout en étant hypocariogène, un goût sucré agréable, si bien qu'il n'est pas forcément nécessaire d'y ajouter un édulcorant intense, produit généralement instable et coûteux, pour disposer d'un produit comparable à son correspondant traditionnel au saccharose.

Parmi les produits convenant particulièrement bien pour la mise en oeuvre de l'invention, on retiendra le maltitol cristallisé dont la pureté chimique est supérieure à 99% en poids tel que celui obtenu selon le procédé de fabrication décrit dans le brevet européen n° 189704 dont est titulaire la société ROQUETTE FRERES.

Concernant le lactitol, celui commercialisé sous forme cristallisée monohydrate par la Société CCA Biochem BV sous la marque déposée LACTY peut convenir. Il faut néanmoins faire observer qu'il est préférable de soumettre le lactitol monohydrate à une déshydratation avant de l'employer dans le chocolat suivant l'invention.

Pour ce qui est de l'isomaltulose hydrogéné cristallisé, on peut choisir comme cela a été dit précédemment, celui commercialisé par la Sté SUDDEUTSCHE ZUCKER GmbH sous la marque PALATINIT ou la dénomination ISOMALT. Comme pour le lactitol, on utilisera de préférence ce produit sous forme déshydratée.

Les polymères de saccharides hypocaloriques peuvent être choisis parmi les polymères de glucose ou de fructose ou les fibres végétales non assimilables par l'organisme.

Il a été constaté que le polymère de condensation du glucose en présence d'acide citrique et de sorbitol (ces produits faisant respectivement fonction de catalyseur et de plastifiant), convenait bien comme constituant de la charge édulcorante dans le chocolat conforme à l'invention.

Ce type de produit est commercialisé par la société PFIZER sous les marques POLYDEXTROSE et LITESSE.

De la même façon, les fructooligosaccharides, dénommés également néosucres et obtenus par action enzymatique sur le saccharose, qui comprennent par exemple le produit commercialisé sous la marque ACTILIGHT par la société BEGHIN SAY, se sont avérés utilisables dans le chocolat conforme à l'invention.

Des édulcorants intenses tels que l'aspartame ou l'acésulfame K, ou bien encore des polyols à pouvoir sucrant élevé tel que le xylitol ou l'érythritol peuvent également rentrer dans la constitution de la charge édulcorante du chocolat conforme à l'invention.

Selon un mode de réalisation préféré, le chocolat conforme à l'invention comprend de 35% à 65% en poids, de préférence de 45 à 55% en poids, de polyol cristallisé, constituant la charge édulcorante, et de 20 à 32%, de préférence de 25% à 32% en poids de matière grasse, celle-ci provenant de préférence du cacao et/ou du lait.

Il va de soi qu'au chocolat conforme à l'invention peuvent être additionnés des produits de garnissage tels que les céréales et/ou les fruits (noisettes, amandes, raisins secs).

La présente invention a également pour objet un procédé de fabrication de chocolat hypocalorique comprenant les ingrédients suivants :
- de la matière grasse, de préférence issue du cacao,
- une charge édulcorante,
- un émulsifiant,
- et éventuellement du cacao sec dégraissé et/ou un produit lacté pulvérulent ou dérivé.

Ce procédé comporte essentiellement les étapes successives suivantes :
- pétrissage à chaud de la matière grasse de cacao, de la charge édulcorante et éventuellement de cacao sec dégraissé et/ou de produit lacté pulvérulent ou dérivé, permettant d'obtenir une pâte homogène,
- raffinage de la pâte permettant d'obtenir une poudre,
- éventuellement conchage à chaud et à sec de la poudre,
- conchage liquide à chaud de la poudre après ajoût de beurre de cacao et d'un émulsifiant tel que la lécithine,
- tempérage à température inférieure à la température de conchage,
- coulage,
- refroidissement,
- conditionnement.

Il est caractérisé en ce que la teneur en matière grasse de la pâte lors du raffinage est établie entre 20 et 28% en poids, tandis qu'elle est établie à une valeur inférieure à 32% en poids au moment du coulage, et en ce que la charge édulcorante est à base de maltitol cristallisé de haute pureté, de lactitol pulvérulent, d'isomaltulose hydrogéné pulvérulent, de polymères de saccharides hypocaloriques pulvérulents ou d'un mélange de ces produits.

De façon différente de celles prévues par les procédés connus pour fabriquer du chocolat aux polyols, le procédé suivant l'invention permet de travailler avec des teneurs en matières grasses réduites sans que cela ne pose de difficultés technologiques et sans compromettre la qualité du produit fini.

Conformément à une disposition avantageuse du procédé selon l'invention la température de conchage est comprise entre 50 et 85°C.

Dans le cas d'une fabrication de chocolat au lait ou de chocolat blanc, la température est de préférence comprise entre 63 et 67°C, et plus préférentiellement encore elle est de l'ordre de 65°C.

Concernant le chocolat noir, cette température est de préférence comprise entre 75 et 85°C et plus préférentiellement encore elle est de l'ordre de 80°C.

Dans le cas où la charge édulcorante comprend du maltitol et/ou du lactitol et/ou de l'isomaltulose hydrogéné, ces polyols ont de préférence une pureté chimique supérieure ou égale à 92% et se présentent sous forme anhydre, c'est-à-dire qu'ils comprennent moins de 1% d'eau.

Les nombreux avantages et variantes de l'invention, aussi bien en ce qui concerne le chocolat à teneur réduite en matières grasses que le procédé de fabrication d'un chocolat de ce type, ressortiront des exemples de réalisation et de mise en oeuvre qui suivent.

Le procédé général commun à tous les exemples pour la fabrication de chocolat conforme à l'invention comprend les étapes de pétrissage - raffinage - éventuellement conchage à sec - conchage liquide - température - coulage - refroidissement - conditionnement.

Les ingrédients de base utilisés pour la préparation de chocolat noir sont les suivants :
- beurre de cacaco provenant de la Société CACAO BARRY,
- pâte de cacao à 54 % de matières grasses provenant également de la Société CACAO BARRY,
- charge édulcorante sous forme pulvérulente,
- émulsifiant - lécithine de soja commercialisée par la Société LUCAS MEYER.

Le pétrissage consiste à mélanger intimement la pâte de cacao tempérée à 45°C, la charge édulcorante et éventuellement une partie du beurre de cacao également tempérée à 45°C, à l'aide du pétrin équipé de bras en forme de "Z" du type de ceux commercialisés par la Société SVIAC. Le pétrissage dure une dizaine de minutes à température ambiante.

Le mélange obtenu, se présentant sous forme pâteuse, est ensuite soumis à un raffinage consistant à le faire passer deux fois au travers d'un broyeur tricylindre classiquement employé en chocolaterie.

Les pressions de broyage sont réglées à 15 bars pour le premier passage et à 20 bars pour le second. La pâte de départ évolue vers un état pulvérulent plus ou moins gras. Un bon déroulement de cette opération nécessite une pâte suffisamment liée pour être apte à se répartir convenablement sur les cylindres broyeurs. A noter qu'il convient d'obtenir après raffinage une pâte homogène ne présentant pas d'exudations grasses.

La poudre raffinée est ensuite éventuellement traitée par un conchage à sec à une température choisie en fonction de la nature des constituants de la charge édulcorante.

Ce conchage à sec consiste en une aération par agitation mécanique de la poudre qui reprend une texture pâteuse et ce, pendant une durée de cinq heures.

Vient ensuite le conchage liquide qui débute par l'ajoût du reste du beurre de cacao préalablement fondu. La durée de cette agitation, qui se déroule à une température identique à celle de l'éventuel conchage à sec, est d'environ sept heures. La lécithine est additionnée à la pâte une heure avant la fin du conchage.

La pâte conchée est soumise, pendant une demi-heure, à un tempérage dans un mélangeur à double enveloppe dans lequel circule un fluide caloporteur, imposant à la pâte une température de 28°-29°C selon la teneur en matières grasses de la pâte. Au bout de 30 minutes, la température est remontée de quelques degrés de façon à éliminer les formes cristallines instables.

On procède ensuite au coulage de la pâte dans des moules qui sont refroidis une demi-heure à 4°C avant démoulage.

### EXEMPLE I

### Comparaison de différentes substances sucrantes entrant dans la constitution de la charge édulcorante de chocolats noirs.

Pour préparer les chocolats noirs, on s'est conformé à la méthodologie décrite ci-dessus :
Le tableau 1 résume les conditions opératoires.

Dans ce tableau, les matières grasses totales indiquées incluent la lécithine.

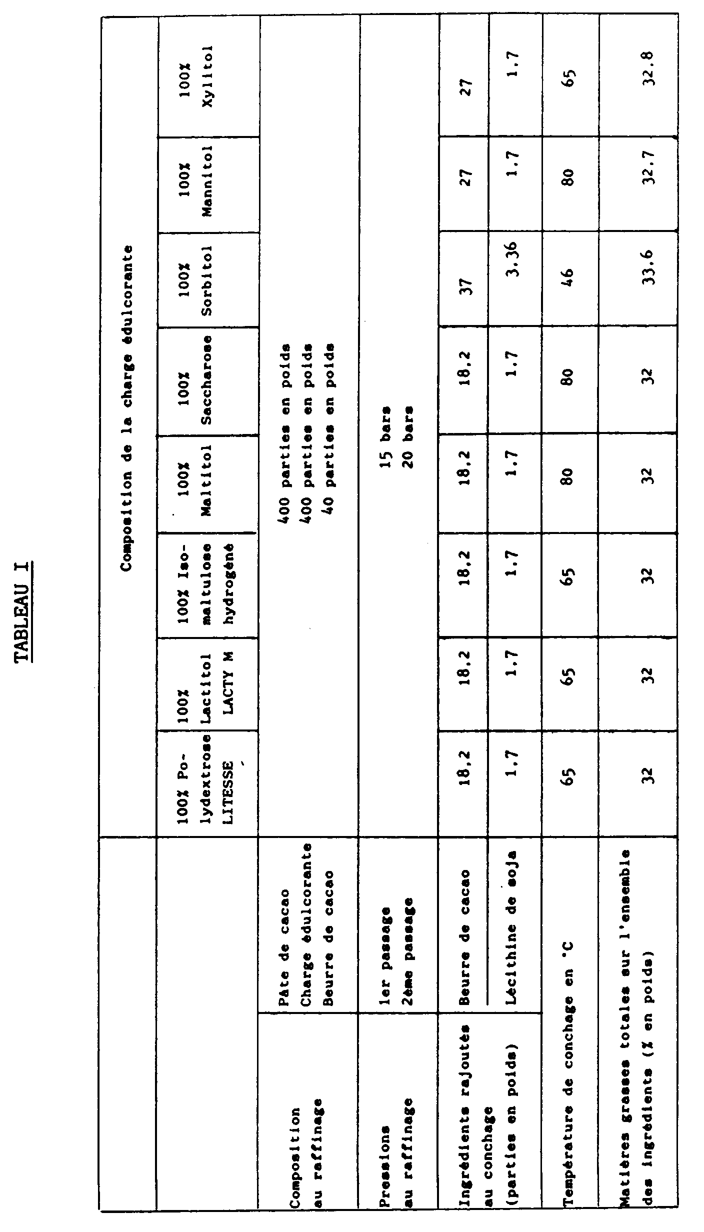

Le polydextrose utilisé est celui commercialisé par la Société PFIZER sous la marque déposée LITESSE.

Le lactitol utilisé est celui sous forme cristallisée monohydrate, désigné par la marque déposée LACTY M et commercialisé par la Société CCA BIOCHEM B.V.

L'isomaltulose hydrogéné utilisé est celui commercialisé sous la marque déposée PALATINIT par la Sté SUDDEUTSCHE ZUCKER GmbH.

Le maltitol A est un maltitol cristallisé d'une pureté de 99,3 % en poids, obtenu par le procédé décrit dans le brevet européen n° 189 704 dont est titulaire la Société ROQUETTE FRERES.

Le saccharose, le sorbitol, le mannitol et le xylitol sont des poudres cristallisées présentes sur le marché.

Il ressort de cette série d'essais que, parmi les polyols testés, seuls les polyols sélectionnés conformément à la présente invention permettent de préparer un chocolat noir ayant un goût acceptable et une teneur en matières grasses de l'ordre de 32 % en poids par rapport à la pâte de cacao, au beurre de cacao, à la charge édulcorante et à l'émulsifiant. Le chocolat noir fabriqué avec le polydextrose LITESSE, est facilement réalisable avec une teneur réduite en matières grasses, et possède des caractéristiques organoleptiques moyennes.

A titre comparatif, le saccharose, produit de référence en chocolaterie, n'a pas permis d'obtenir de meilleurs résultats quant à la réduction des graisses.

On notera que le maltitol A présente l'avantage d'autoriser une température de conchage de l'ordre de 80°C semblable à celle utilisée pour le sucre. Il s'agit d'une température idéale pour le conchage.

### EXEMPLE II

### Essais de réduction de la teneur en matières grasses de chocolats noirs contenant les substances sucrantes conformes à l'invention et sélectionnées dans l'EXEMPLE I.

On peut constater les avantages de l'utilisation des polyols conformes à l'invention, à la lecture du tableau II. Ce tableau présente les conditions opératoires et les résultats de différents essais effectués.

Les composants de la charge édulcorante utilisés étaient les suivants.
Maltitol A
   Maltitol cristallisé fabriqué par la Société ROQUETTE FRERES, ayant une pureté chimique de 99,3 %, le lot utilisé contenant en l'espèce 0,05 % en poids d'eau.
Maltitol B
   Maltitol poudre commercialisé sous la marque déposée AMALTY MR 56, par la Société TOWA CHEMICALS, le lot utilisé en l'espèce présentant une pureté de 88,5 % et une teneur en eau de 1,20 %.
Lactitol C
   Lactitol monohydrate commercialisé par la Société CCA BIOCHEM B.V. sous la marque déposée LACTY M, présentant, pour le lot utilisé en l'espèce, 5,30 % en poids d'eau.
Lactitol D
   Lactitol C déshydraté sous vide poussé contenant 0,04 % en poids d'eau.
Isomaltulose hydrogéné E
   Poudre commercialisée par la Société SUDDEUTSCHE ZUCKER GmbH sous la marque déposée PALATINIT et présentant, pour le lot utilisé en l'espèce, 5,1 % poids d'eau.
Isomaltulose hydrogéné F
   Poudre E déshydratée sous vide poussé contenant 0,05 % en poids d'eau résiduelle.
Polydextrose G
   Poudre commercialisée sous la marque déposée LITESSE par la Société PFIZER et contenant, pour le lot utilisé en l'espèce, 2,10 % en poids d'eau.
Xylitol H
   Xylitol cristallisé fabriqué et commercialisé par la Société ROQUETTE FRERES, contenant, pour le lot utilisé, 0,2 % d'eau en poids.

### Commentaires sur le tableau II

Les compositions de chocolat noir indiquées dans ce tableau II correspondent aux meilleurs résultats obtenus avec chacune des substances sucrantes testées, étant entendu que les conditions opératoires pourraient encore être optimisées pour donner des produits encore plus pauvres en matières grasses. La durée totale du conchage est de 15 heures.

On peut constater que le maltitol A de haute pureté permet d'obtenir la plus forte réduction en matières grasses totales finales par rapport à toutes les autres substances édulcorantes sélectionnées (26,5 % en poids).

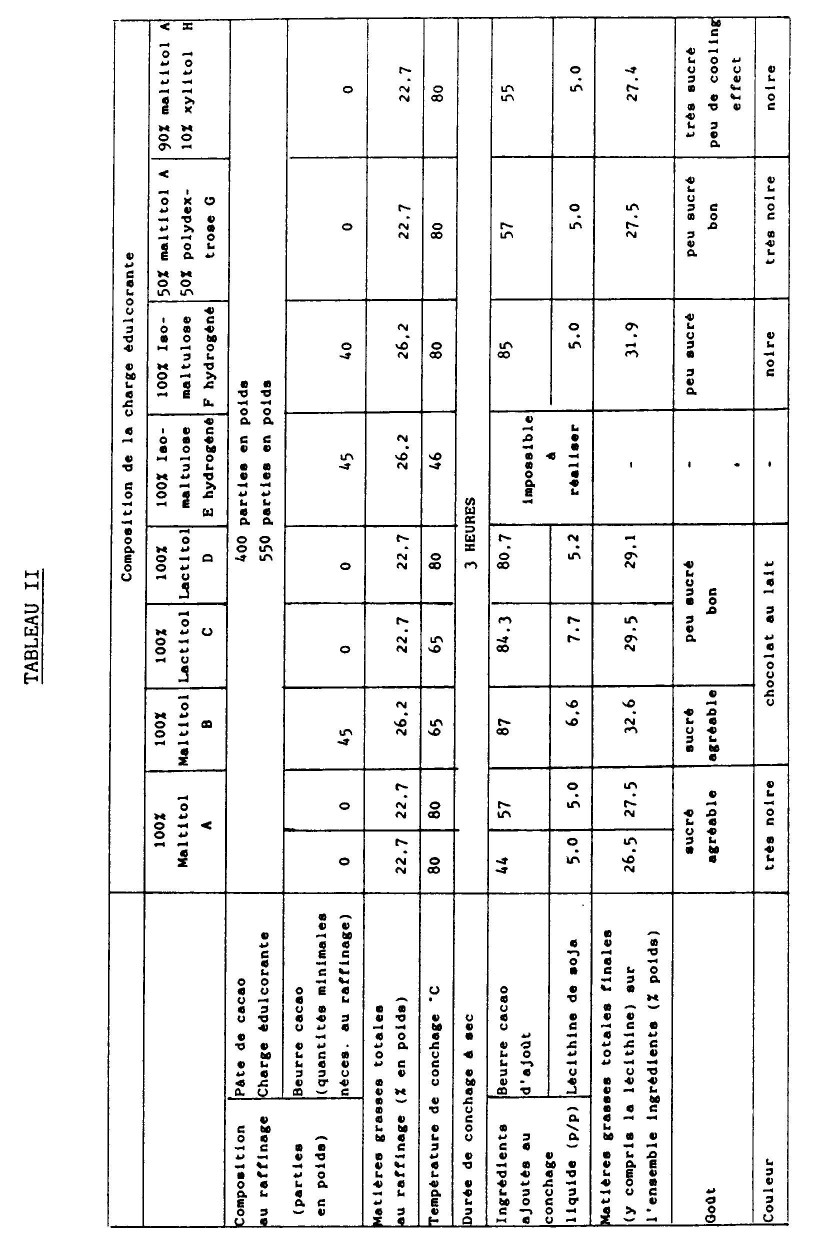

Dans le tableau II, on entend par matières grasses totales finales les matières grasses totales, comprenant donc la lécithine, exprimées en % en poids sur l'ensemble des ingrédients.

Le maltitol B de pureté moindre a nécessité l'emploi d'une plus grande quantité de matières grasses. On a même été contraint d'en rajouter au raffinage du fait du fort pouvoir absorbant de ce produit vis-à-vis des matières grasses.

Le lactitol C a donné également de bons résultats quant à l'allègement final en graisses (29,5 % en poids), sachant que l'on peut encore améliorer cet allègement en utilisant du lactitol D déshydraté (29,1 %). La déshydratation du lactitol a permis également de réduire significativement la teneur en lécithine nécessaire à l'amélioration des propriétés rhéologiques.

En ce qui concerne l'isomaltulose hydrogéné, le conchage à sec n'a été possible qu'en utilisant une forme déshydratée permettant elle aussi une réduction intéressante (31,9 % en poids).

L'association de maltitol A et de polydextrose G ou de xylitol H dans la charge édulcorante donne un résultat avantageux quant à l'allègement en matières grasses sans entraîner de difficultés technologiques. Il n'est pas nécessaire d'en rajouter au raffinage.

S'agissant de l'aspect et des qualités sensorielles des chocolats fabriqués, elles sont toutes satisfaisantes, avec une préférence particulière pour ceux comprenant le maltitol A de haute pureté, associé ou non avec le xylitol H. L'effet de fraicheur du xylitol, considéré classiquement comme non souhaitable dans le chocolat, n'est pas notable lorsqu'il est employé à hauteur de 10 % en poids dans la charge édulcorante.

### EXEMPLE III

### Essais de réduction de la teneur en matières grasses de chocolat blanc, de chocolat au lait, et de base de chocolat noir riche en cacao pour chocolats fourrés.

Dans tous ces essais, la charge édulcorante est exclusivement composée de maltitol A cristallisé de haute pureté utilisé dans les exemples I et II et fabriqué par la Société ROQUETTE FRERES.

Les techniques de fabrication employées sont conformes à celles de l'exemple I.

Le tableau III présente les conditions de fabrication et les caractéristiques des chocolats obtenus à l'issue des essais.

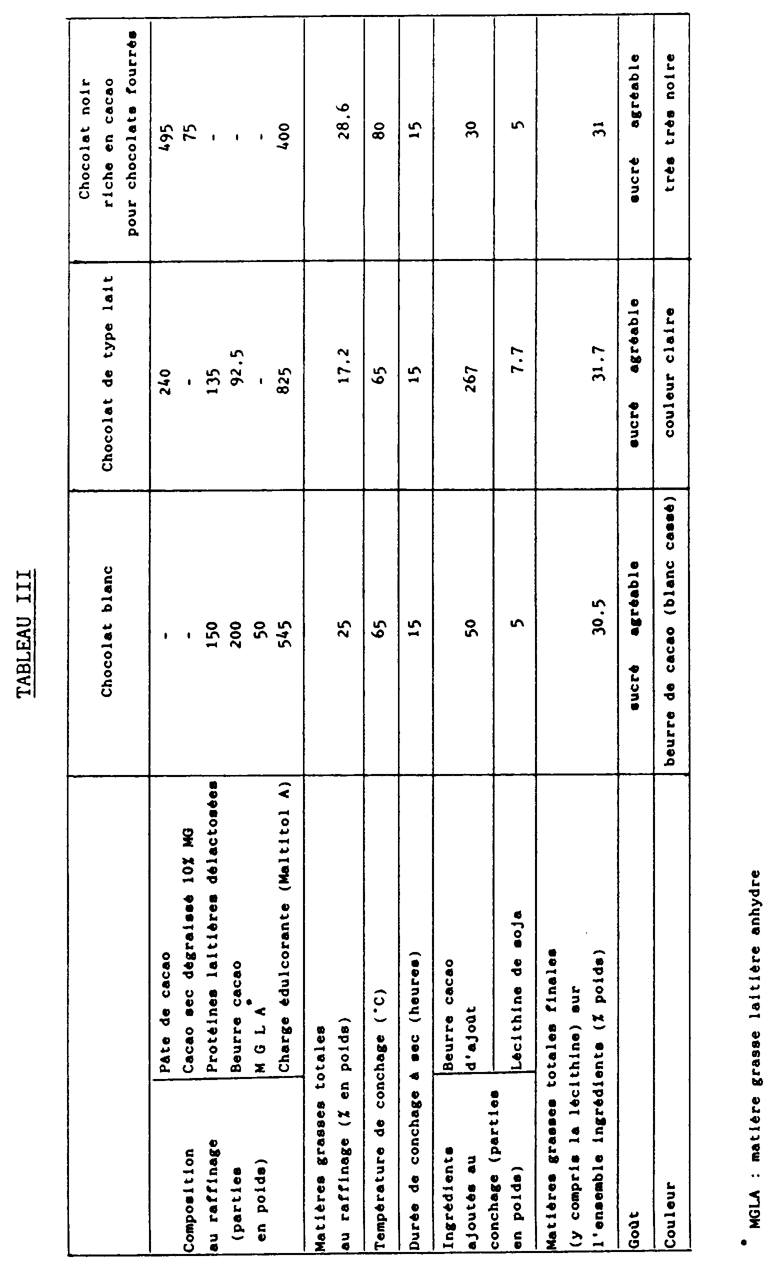

Il apparaît que l'emploi de maltitol cristallisé de haute pureté conformément à l'invention permet de préparer du chocolat blanc, du chocolat au lait ou une base de chocolat noir concentrée pour chocolats fourrés à teneur réduite en matières grasses, respectivement 30,5, 31,7 et 31 % sans poser de difficultés technologiques en cours de fabrication.

Les chocolats obtenus ont un bel aspect et sont tout à fait savoureux tout en bénéficiant d'un allègement calorique intéressant pour le consommateur.

On remarquera que les températures de conchage - 65°C pour le chocolat blanc et le chocolat au lait et 80°C pour le chocolat noir concentré - sont semblables à celles de la technologie classique au saccharose et constituent un optimum au regard du développement d'un profil aromatique idoine pour les chocolats.

## Revendications

1. Chocolat hypocalorique noir, comprenant de la matière grasse, une charge édulcorante, au moins un émulsifiant, et du cacao sec dégraissé, dans lequel la charge édulcorante comprend un produit pulvérulent choisi dans le groupe constitué par le maltitol, le lactitol, l'isomaltulose hydrogéné et les polymères de saccharides hypocaloriques, et dans lequel la teneur en matières grasses totales est inférieure à 32 % en poids par rapport à l'ensemble des susdits ingrédients, ledit chocolat ayant des propriétés technologiques et organoleptiques comparables à celles du chocolat au saccharose traditionnel.

2. Chocolat hypocalorique blanc comprenant de la matière grasse, une charge édulcorante, au moins un émulsifiant, et un produit lacté pulvérulent ou dérivé, dans lequel la charge édulcorante comprend un produit pulvérulent choisi dans le groupe constitué par le maltitol, le lactitol, l'isomaltulose hydrogéné et les polymères de saccharides hypocaloriques, et dans lequel la teneur en matières grasses totales est inférieure à 32 % en poids par rapport à l'ensemble des susdits ingrédients, ledit chocolat ayant des propriétés technologiques et organoleptiques comparables à celles du chocolat au saccharose traditionnel.

3. Chocolat au lait hypocalorique comprenant de la matière grasse, une charge édulcorante, au moins un émulsifiant, du cacao sec dégraissé, et un produit lacté pulvérulent ou dérivé, dans lequel la charge édulcorante comprend un produit pulvérulent choisi dans le groupe constitué par le maltitol, le lactitol, l'isomaltulose hydrogéné et les polymères de saccharides hypocaloriques, et dans lequel la teneur en matières grasses totales est inférieure à 32 % en poids par rapport à l'ensemble des susdits ingrédients, ledit chocolat ayant des propriétés technologiques et organoleptiques comparables à celles du chocolat au saccharose traditionnel.

4. Composition de chocolat hypocalorique selon l'une quelconque des revendications 1 à 3, dans laquelle la teneur en matières grasses totales est inférieure à 31 % en poids par rapport à l'ensemble des ingrédients.

5. Composition de chocolat hypocalorique selon la revendication 4, dans laquelle la teneur en matières grasses totales est inférieure à 29 % en poids par rapport à l'ensemble des ingrédients.

6. Composition de chocolat hypocalorique selon l'une quelconque des revendications 1 à 3, dans laquelle le maltitol est du maltitol cristallisé dont la teneur en maltitol n'est pas inférieure à 92 %.

7. Composition de chocolat hypocalorique selon la revendication 6, dans laquelle le maltitol est du maltitol cristallisé dont la teneur en maltitol n'est pas inférieure à 95 %.

8. Composition de chocolat hypocalorique selon la revendication 7, dans laquelle le maltitol est du maltitol cristallisé dont la teneur en maltitol n'est pas inférieure à 97 %.

9. Composition de chocolat hypocalorique selon l'une quelconque des revendications 1 à 3, comprenant :
- 35 à 65 % en poids de polyol cristallisé à titre de charge édulcorante,
- 20 à 32 % en poids de matières grasses.

10. Composition de chocolat hypocalorique selon la revendication 9, comprenant :
- 45 à 55 % en poids de polyol cristallisé à titre de charge édulcorante,
- 25 à 32 % en poids de matières grasses.

11. Composition de chocolat hypocalorique selon l'une quelconque des revendications 1 à 3, incluant un édulcorant intense tel que l'aspartame ou acesulfame K.

12. Composition de chocolat hypocalorique selon l'une quelconque des revendications 1 à 3, incluant une poudre édulcorante intense telle que le xylitol ou l'érythritol.

13. Composition de chocolat hypocalorique selon l'une quelconque des revendications 1 à 3, dans laquelle les polymères de saccharides hypocaloriques sont choisis parmi les polymères de glucose ou de fructose ou des fibres végétales.

14. Composition de chocolat hypocalorique selon la revendication 13, dans laquelle les polymères de saccharides hypocaloriques sont le polydextrose, les fructooligosaccharides ou les néosucres.

15. Composition de chocolat hypocalorique selon l'une quelconque des revendications 1 à 3, dans laquelle les constituants de la charge édulcorante sont dans une forme déshydratée ou anhydre, avec une teneur en eau inférieure à 1 %.

16. Procédé de fabrication de chocolat hypocalorique noir présentant une teneur en matières grasses totales inférieure à 32 % en poids, et comprenant de la matière grasse, au moins un émulsifiant, du cacao sec dégraissé, et une charge édulcorante comprenant un produit pulvérulent choisi dans le groupe constitué par le maltitol, le lactitol, l'isomaltulose hydrogéné et les polymères de saccharides hypocaloriques, ledit procédé comprenant le pétrissage desdits matière grasse, émulsifiant, cacao sec dégraissé et charge édulcorante afin d'obtenir une pâte homogène, raffinage de la pâte afin d'obtenir une poudre, et conchage de la poudre raffinée préférablement à une température entre 75 et 85°C afin de produire un chocolat hypocalorique noir, ledit chocolat ayant de propriétés technologiques et organoleptiques comparables à celles du chocolat au saccharose traditionnel.

17. Procédé de fabrication de chocolat hypocalorique blanc présentant une teneur en matières grasses totales inférieure à 32 % en poids, et comprenant de la matière grasse, au moins un émulsifiant, un produit lacté pulvérulent ou dérivé, et une charge édulcorante comprenant un produit pulvérulent choisi dans le groupe constitué par le maltitol, le lactitol, l'isomaltulose hydrogéné et les polymères de saccharides hypocaloriques, ledit procédé comprenant le pétrissage desdits matière grasse, émulsifiant, produit lacté pulvérulent ou dérivé et charge édulcorante afin d'obtenir une pâte homogène, raffinage de la pâte afin d'obtenir une poudre, et conchage de la poudre raffinée préférablement à une température entre 63 et 67°C afin de produire un chocolat hypocalorique blanc, ledit chocolat ayant de propriétés technologiques et organoleptiques comparables à celles du chocolat au saccharose traditionnel.

18. Procédé de fabrication de chocolat hypocalorique au lait présentant une teneur en matières grasses totales inférieure à 32 % en poids, et comprenant de la matière grasse, au moins un émulsifiant, du cacao sec dégraissé, un produit lacté pulvérulent ou dérivé, et une charge édulcorante comprenant un produit pulvérulent choisi dans le groupe constitué par le maltitol, le lactitol, l'isomaltulose hydrogéné et les polymères de saccharides hypocaloriques, ledit procédé comprenant le pétrissage desdits matière grasse, émulsifiant, cacao sec dégraissé, produit lacté pulvérulent ou dérivé et charge édulcorante afin d'obtenir une pâte homogène, raffinage de la pâte afin d'obtenir une poudre, et conchage de la poudre raffinée préférablement à une température entre 63 et 67°C afin de produire un chocolat au lait hypocalorique, ledit chocolat ayant de propriétés technologiques et organoleptiques comparables à celles du chocolat au saccharose traditionnel.

19. Procédé selon l'une quelconque des revendications 15 à 18 comprenant un conchage liquide et éventuellement un conchage à sec.

## Claims

1. Low-calorie dark chocolate, comprising fat, a sweetening mass, at least one emulsifier, and defatted desiccated cocoa, wherein the sweetening mass comprises a pulverulent product selected from the group consisting of maltitol, lactitol, hydrogenated isomaltulose and low-calorie saccharide polymers, and wherein the total fat content of the composition is less than 32 % by weight with respect to the totality of the above-cited ingredients, said chocolate having technical and organoleptic properties comparable to those of traditional sucrose-containing chocolate.

2. Low-calorie white chocolate, comprising fat, a sweetening mass, at least one emulsifier, and a pulverulent milky product or derivative thereof, wherein the sweetening mass comprises a pulverulent product selected from the group consisting of maltitol, lactitol, hydrogenated isomaltulose and low-calorie saccharide polymers, and wherein the total fat content of the composition is less than 32 % by weight with respect to the totality of the above-cited ingredients, said chocolate having technical and organoleptic properties comparable to those of traditional sucrose-containing chocolate.

3. Low-calorie milk chocolate comprising fat a sweetening mass, at least one emulsifier, defatted, desiccated cocoa, and a pulverulent milky product or derivative thereof, wherein the sweetening mass comprises a pulverulent product selected from the group consisting of maltitol, lactitol, hydrogenated isomaltulose and low-calorie saccharide polymers, and wherein the total fat content of the composition is less than 32 % by weight with respect to the totality of the above-cited ingredients, said chocolate having technical and organoleptic properties comparable to those of traditional sucrose-containing chocolate.

4. Low-calorie chocolate composition according to any one of claims 1 to 3, wherein the total fat content is less than 31 % by weight with respect to the totality of the ingredients.

5. Low-calorie chocolate composition according to claim 4, wherein the total fat content is less than 29% by weight with respect to the totality of the ingredients.

6. Low-calorie chocolate composition according to any one of the claims 1 to 3, wherein the maltitol is crystallized maltitol having a maltitol content of not less than 92 %.

7. Low-calorie chocolate composition according to claim 6, wherein the maltitol is crystallized maltitol having a maltitol content of not less than 95 %.

8. Low-calorie chocolate composition according to claim 7, wherein the maltitol is crystallized maltitol having a maltitol content of not less than 97 %.

9. Low-calorie chocolate composition according to any one of claims 1 to 3, comprising :
- 35 % to 65 % by weight of crystallized polyol as sweetening mass,
- 20 to 32 % by weight of fatty substances.

10. Low-calorie chocolate according to claim 9, comprising :
- 45 to 55 % by weight of crystallized polyol as sweetening mass,
- 25 to 32 % by weight of fatty substances.

11. Low-calorie chocolate composition according to any one of claims 1 to 3, including an intense sweetening agent such as aspartame or acesulfame K.

12. Low-calorie chocolate composition according to any one of claims 1 to 3, including an intense sweetening powder such as xylitol or erythritol.

13. Low-calorie chocolate composition according to any one of claims 1 to 3, wherein the low-calorie saccharide polymers are chosen among polymers of glucose, fructose or vegetable fibres.

14. Low-calorie chocolate composition according to claim 13, wherein the low-calorie saccharide polymers are polydextrose, fructo-oligosaccharides or neosugars.

15. Low-calorie chocolate composition according to any one of claims 1 to 3, wherein the constituents of the sweetening agent are in dehydrated or anhydrous form, with a water content of less than 1 %.

16. Process for manufacturing low-calorie dark chocolate having a total fat content less than 32 % by weight, and comprising fat, at least one emulsifier, defatted desiccated cocoa, and a sweetening mass comprising a pulverulent product selected from the group consisting of maltitol, lactitol, hydrogenated isomaltulose and low-calorie saccharide polymers, said process comprising kneading said fat, sweetening mass, emulsifier and defatted desiccated cocoa so as to obtain a homogeneous paste, refining the paste so as to obtain a powder, and conching the refined powder at a temperature of between 75° and 85° C, to produce a low calorie dark chocolate, said chocolate having technical and organoleptic properties comparable to those of traditional sucrose-containing chocolate.

17. Process for manufacturing low-calorie white chocolate having a total fat content of less than 32 % by weight, and comprising fat, at least one emulsifier, a pulverulent milky product or derivative thereof and a sweetening mass comprising a pulverulent product selected from the group consisting of maltitol, lactitol, hydrogenated isomaltulose and low-calorie saccharide polymers, said process comprising kneading said fat, sweetening mass, emulsifier and pulverulent milky product or derivative thereof so as to obtain a homogeneous paste, refining the paste so as to obtain a powder, and conching the refined powder at a temperature of between 63° and 67° C, to produce a low calorie white chocolate, said chocolate having technical and organoleptic properties comparable to those of traditional sucrose-containing chocolate.

18. Process for manufacturing low-calorie milk chocolate having a total fat content of less than 32 % by weight, and comprising fat, at least one emulsifier, defatted desiccated cocoa, a pulverulent milky product or derivative thereof and a sweetening mass comprising a pulverulent product selected from the group consisting of maltitol, lactitol, hydrogenatetd isomaltulose and low-calorie saccharide polymers, said process comprising kneading said fat, sweetening mass, emulsifier, defatted desiccated cocoa and pulverulent milky product or derivative thereof so as to obtain a homogeneous paste, refining the paste so as to obtain a powder, and conching the refined powder at a temperature of between 63° and 67° C, to produce a low calorie milk chocolate, said chocolate having technical and organoleptic properties comparable to those of traditional sucrose-containing chocolate.

19. Process according to any one of claims 15 to 18 comprising liquid conching and optionally dry conching.

## Patentansprüche

1. Hypokalorische schwarze Schokolade, umfassend Fett, einen süßenden Füllstoff, mindestens einen Emulgator und entfetteten, trockenen Kakao, bei der der süßende Füllstoff ein pulverförmiges Produkt umfaßt, gewählt aus der durch Maltitol, Lactitol, hydrierte Isomaltulose und die Polymere von hypokalorischen Sacchariden gebildeten Gruppe, und der Gehalt an Gesamtfetten unter 32 Gew.-% liegt, bezogen auf die Gesamtheit der oben erwähnten Bestandteile, wobei die genannte Schokolade technologische und organoleptische Eigenschaften besitzt, die mit denen der Schokolade aus herkömmlicher Saccharose vergleichbar sind.

2. Hypokalorische weiße Schokolade, umfassend Fett, einen süßenden Füllstoff, mindestens einen Emulgator und ein pulverförmiges Milchprodukt oder ein Derivat davon, bei der der süßende Füllstoff ein pulverförmiges Produkt umfaßt, gewählt aus der durch Maltitol, Lactitol, hydrierte Isomaltulose und die Polymere von hypokalorischen Sacchariden gebildeten Gruppe, und der Gehalt an Gesamtfetten unter 32 Gew.-% liegt, bezogen auf die Gesamtheit der oben erwähnten Bestandteile, wobei die genannte Schokolade technologische und organoleptische Eigenschaften besitzt, die mit denen der Schokolade aus herkömmlicher Saccharose vergleichbar sind.

3. Hypokalorische Milchschokolade, umfassend Fett, einen süßenden Füllstoff, mindestens einen Emulgator, entfetteten, trockenen Kakao und ein pulverförmiges Milchprodukt oder ein Derivat davon, bei der der süßende Füllstoff ein pulverförmiges Produkt umfaßt, gewählt aus der durch Maltitol, Lactitol, hydrierte Isomaltulose und die Polymere von hypokalorischen Sacchariden gebildeten Gruppe, und der Gehalt an Gesamtfetten unter 32 Gew.-% liegt, bezogen auf die Gesamtheit der oben erwähnten Bestandteile, wobei die genannte Schokolade technologische und organoleptische Eigenschaften besitzt, die mit denen der Schokolade aus herkömmlicher Saccharose vergleichbar sind.

4. Zusammensetzung von hypokalorischer Schokolade nach irgendeinem der Ansprüche 1 bis 3, wobei der Gehalt an Gesamtfetten unter 31 Gew.-% liegt, bezogen auf die Gesamtheit der Bestandteile.

5. Zusammensetzung von hypokalorischer Schokolade nach Anspruch 4, wobei der Gehalt an Gesamtfetten unter 29 Gew.-% liegt, bezogen auf die Gesamtheit der Bestandteile.

6. Zusammensetzung von hypokalorischer Schokolade nach irgendeinem der Ansprüche 1 bis 3, wobei das Maltitol kristallisiertes Maltitol ist, dessen Gehalt an Maltitol nicht unter 92 % liegt.

7. Zusammensetzung von hypokalorischer Schokolade nach Anspruch 6, wobei das Maltitol kristallisierteS Maltitol ist, dessen Gehalt an Maltitol nicht unter 95 % liegt.

8. Zusammensetzung von hypokalorischer Schokolade nach Anspruch 7, wobei das Maltitol kristallisiertes Maltitol ist, dessen Gehalt an Maltitol nicht unter 97 % liegt.

9. Zusammensetzung von hypokalorischer Schokolade nach irgendeinem der Ansprüche 1 bis 3, umfassend:
- 35 bis 65 Gew.-% kristallisiertes Polyol als süßenden Füllstoff,
- 20 bis 32 Gew.-% Fette.

10. Zusammensetzung von hypokalorischer Schokolade nach Anspruch 9, umfassend:
- 45 bis 55 Gew.-% kristallisiertes Polyol als süßenden Füllstoff,
- 25 bis 32 Gew.-% Fette.

11. Zusammensetzung von hypokalorischer Schokolade nach irgendeinem der Ansprüche 1 bis 3, die einen intensiven Süßstoff wie Aspartam oder Acesulfam K einschließt.

12. Zusammensetzung von hypokalorischer Schokolade nach irgendeinem der Ansprüche 1 bis 3, die ein intensives Süßstoff-Pulver wie Xylitol oder Erythritol einschließt.

13. Zusammensetzung von hypokalorischer Schokolade nach irgendeinem der Ansprüche 1 bis 3, wobei die Polymere von hypokalorischen Sacchariden unter den Polymeren von Glucose oder Fructose oder von Pflanzenfasern ausgewählt werden.

14. Zusammensetzung von hypokalorischer Schokolade nach Anspruch 13, wobei die Polymere von hypokalorischen Sacchariden Polydextrose, die Fructo-Oligosaccharide oder die Neozucker sind.

15. Zusammensetzung von hypokalorischer Schokolade nach irgendeinem der Ansprüche 1 bis 3, wobei die Bestandteile des süßenden Füllstoffes in dehydratisierter oder wasserfreier Form vorliegen, mit einem Wassergehalt von unter 1 %.

16. Verfahren zur Herstellung von hypokalorischer schwarzer Schokolade, die einen Gehalt an Gesamtfetten von unter 32 Gew.-% aufweist und Fett, mindestens einen Emulgator, entfetteten, trockenen Kakao und einen süßenden Füllstoff umfaßt, der seinerseits ein pulverförmiges Produkt umfaßt, gewählt aus der durch Maltitol, Lactitol, hydrierte Isomaltulose und die Polymere von hypokalorischen Sacchariden gebildeten Gruppe, wobei das genannte Verfahren das Kneten der genannten Bestandteile Fett, Emulgator, entfetteter, trockener Kakao und süßender Füllstoff, um eine homogene Paste zu erhalten, die Raffinierung der Paste, um ein Pulver zu erhalten, und die Conchage des zuvor bei einer Temperatur zwischen 75 °C und 85 °C raffinierten Pulvers umfaßt, um eine hypokalorische schwarze Schokolade herzustellen, wobei die genannte Schokolade technologische und organoleptische Eigenschaften besitzt, die mit denen der Schokolade aus herkömmlicher Saccharose vergleichbar sind.

17. Verfahren zur Herstellung von hypokalorischer weißer Schokolade, die einen Gehalt an Gesamtfetten von unter 32 Gew.-% aufweist und Fett, mindestens einen Emulgator, ein pulverförmiges Milchprodukt oder ein Derivat davon und einen süßenden Füllstoff umfaßt, der seinerseits ein pulverförmiges Produkt umfaßt, gewählt aus der durch Maltitol, Lactitol, hydrierte Isomaltulose und die Polymere von hypokalorischen Sacchariden gebildeten Gruppe, wobei das genannte Verfahren das Kneten der genannten Bestandteile Fett, Emulgator, pulverförmiges Milchprokukt oder ein Derivat davon und süßender Füllstoff, um eine homogene Paste zu erhalten, die Raffinierung der Paste, um ein Pulver zu erhalten, und die Conchage des zuvor bei einer Temperatur zwischen 63 °C und 67 °C raffinierten Pulvers umfaßt, um eine hypokalorische weiße Schokolade herzustellen, wobei die genannte Schokolade technologische und organoleptische Eigenschaften besitzt, die mit denen der Schokolade aus herkömmlicher Saccharose vergleichbar sind.

18. Verfahren zur Herstellung von hypokalorischer Milchschokolade, die einen Gehalt an Gesamtfetten von unter 32 Gew.-% aufweist und Fett, mindestens einen Emulgator, entfetteten, trockenen Kakao, ein pulverförmiges Milchprodukt oder ein Derivat davon und einen süßenden Füllstoff umfaßt, der seinerseits ein pulverförmiges Produkt umfaßt, gewählt aus der durch Maltitol, Lactitol, hydrierte Isomaltulose und die Polymere von hypokalorischen Sacchariden gebildeten Gruppe, wobei das genannte Verfahren das Kneten der genannten Bestandteile Fett, Emulgator, entfetteter, trockener Kakao, pulverförmiges Milchprodukt oder ein Derivat davon und süßender Füllstoff, um eine homogene Paste zu erhalten, die Raffinierung der Paste, um ein Pulver zu erhalten, und die Conchage des zuvor bei einer Temperatur zwischen 63 °C und 67 °C raffinierten Pulvers umfaßt, um eine hypokalorische Milchschokolade herzustellen, wobei die genannte Schokolade technologische und organoleptische Eigenschaften besitzt, die mit denen der Schokolade aus herkömmlicher Saccharose vergleichbar sind.

19. Verfahren nach irgendeinem der Ansprüche 15 bis 18, umfassend eine flüssige Conchage und gegebenenfalls eine Trocken-Conchage.
